(19) Europäisches Patentamt
European Patent Office
Office européen des brevets

(11) Veröffentlichungsnummer: **0 257 558 B1**

# (12) EUROPÄISCHE PATENTSCHRIFT

(45) Veröffentlichungstag der Patentschrift: **02.01.92**

(51) Int. Cl.[5]: **C08G 63/60**, C09K 19/38

(21) Anmeldenummer: **87112062.2**

(22) Anmeldetag: **20.08.87**

Die Akte enthält technische Angaben, die nach dem Eingang der Anmeldung eingereicht wurden und die nicht in dieser Patentschrift enthalten sind.

## (54) Vollaromatische thermotrope Polyester.

(30) Priorität: **28.08.86 DE 3629211**

(43) Veröffentlichungstag der Anmeldung:
**02.03.88 Patentblatt 88/09**

(45) Bekanntmachung des Hinweises auf die Patenterteilung:
**02.01.92 Patentblatt 92/01**

(84) Benannte Vertragsstaaten:
**BE DE FR GB NL SE**

(56) Entgegenhaltungen:
**EP-A- 0 199 020**
**EP-A- 0 275 324**
**DE-A- 3 419 749**
**FR-A- 2 300 150**
**GB-A- 2 158 832**

(73) Patentinhaber: **BASF Aktiengesellschaft**
**Carl-Bosch-Strasse 38**
**W-6700 Ludwigshafen(DE)**

(72) Erfinder: **Portugall, Michael, Dr.**
**Raiffeisenstrasse 7**
**W-6706 Wachenheim(DE)**
Erfinder: **Hisgen, Bernd, Dr.**
**Goethestrasse 6**
**W-6703 Limburgerhof(DE)**
Erfinder: **Kock, Hans-Jakob, Dr.**
**Benckiserstrasse 63**
**W-6700 Ludwigshafen(DE)**
Erfinder: **Seiler, Erhard, Dr.**
**Erpolzheimer Strasse 1**
**W-6700 Ludwigshafen(DE)**
Erfinder: **Blinne, Gerd, Dr.**
**Im Woogtal 7**
**W-6719 Bobenheim(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vollaromatische thermotrope Polyester auf der Basis von

A) 30 bis unter 60 mol% 4-Hydroxybenzoesäure

B) 20 bis 35 mol% einer Mischung aus

$B_1$) Terephthalsäure und

$B_2$) Isophthalsäure

wobei das molare Verhältnis von $B_1 : B_2$ im Bereich von 1,04:1 bis 19:1 liegt, und

C) 20 bis 35 mol% einer Mischung aus

$C_1$) Hydrochinon

$C_2$) 4,4′-Dihydroxydiphenyl und

$C_3$) 0 bis 5 mol% einer Dihydroxyverbindung der allgemeinen Formel I

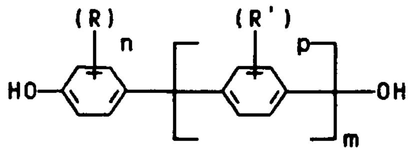

(I)

wobei R und R′ Alkylgruppen mit 1 bis 4 C-Atomen, Halogen oder eine Arylgruppe darstellen, n und p den Wert 1, 2 oder 3 und m den Wert 0 oder 1 haben, das molare Verhältnis von $C_1 : C_2$ im Bereich von 0,1:1 bis 2,67:1 liegt und

das molare Verhältnis von B:C im Bereich von 0,9:1 bis 1,1:1 liegt.

Die Summe der Komponenten A + B + C ergibt stets 100 mol%.

Weiterhin betrifft die Erfindung ein Verfahren zur Herstellung derartiger Polyester und deren Verwendung zur Herstellung von Fasern, Folien und Formkörpern.

Als "thermotrop" bezeichnet man ganz allgemein Substanzen, die flüssigkristalline Schmelzen bilden, d.h. Schmelzen mit anisotropen Eigenschaften.

Thermotrope aromatische Polyester aus aromatischen Dicarbonsäuren und Dihydroxyverbindungen sowie gegebenenfalls aromatischen Hydroxycarbonsäuren sind bekannt und z.B. in der GB-A-2 061 304, der DE-A-20 25 971, der EP-A-33 147 und der EP-A-92 843 beschrieben. Nachteilig nach diesen bekannten Systemen ist der Umstand, daß sie in einem komplizierten und zeitaufwendigen mehrstufigen Prozeß hergestellt werden müssen. Auch weisen die Produkte in der Regel Schmelzpunkte oberhalb von 350 °C auf, was die thermoplastische Verarbeitung wesentlich erschwert.

Aus der DE-A 34 19 749 sind vollaromatische thermotrope Polyester aus 4-Hydroxybenzoesäure, Terephthalsäure, Isophthalsäure, Hydrochinon und 3,4'- oder 4,4'-Dihydroxydiphenyl, -diphenylether oder -diphenylsulfid bekannt. Diese produkte weisen zwar gute mechanische Eigenschaften auf, jedoch sind sie hinsichtlich der Wärmeformbeständigkeit nicht zufriedenstellend.

In der DE-A-35 17 587 werden thermoplastische Formmassen beschrieben, die neben einem Grundharz eines Oxibenzoyl-Copolyesters eine kleinere Menge eines polymeren Fließmodifikates enthält, der aus Terephthalsäure, Isophthalsäure, 4-Hydroxybenzoesäure, Hydrochinon und 4,4'-Dihydroxydiphenyl aufgebaut ist. Aus den Ausführungen in der Beschreibung geht hervor, daß Hydrochinon nur dann als Ausgangsstoff eingesetzt wird, wenn als Säurekomponente lediglich Isophthalsäure vorhanden ist. Die in den Beispielen beschriebenen Fließmodifikatoren weisen zum einen sehr hohe Schmelzpunkte auf (Beispiel 3: mehr als 400 °C) oder zeigen keinen kristallinen Schmelzpunkt, d.h. besitzen nur eine geringe Wärmeformbeständigkeit.

Aufgabe der vorliegenden Erfindung war es, vollaromatische thermotrope Polyester zur Verfügung zu stellen, die im Vergleich zu den in der DE-A-35 17 587 beschriebenen Fließmodifikatoren leichter thermoplastisch verarbeitet werden können und gleichzeitig eine verbesserte Wärmeformbeständigkeit aufweisen.

Diese Aufgabe wird erfindungsgemäß durch die eingangs definierten vollaromatischen thermotropen Polyester gelöst.

Die erfindungsgemäßen vollaromatischen Polyester bauen sich auf aus Einheiten die sich von 4-Hydroxybenzoesäure (A), Terephthalsäure ($B_1$), Isophthalsäure ($B_2$), Hydrochinon ($C_1$) und 4,4' -Dihydroxydiphenyl ($C_2$) ableiten.

Der Anteil von 4-Hydroxybenzoesäure (Komponente A) liegt im Bereich von 30 bis unter 60, insbesondere von 35 bis 55 mol%.

Die Mischungen aus Terephthalsäure und Isophthalsäure (Komponente B) werden in einer Menge von 20 bis 35, vorzugsweise 22,5 bis 32,5 mol%, eingesetzt. Entsprechendes gilt auch für den Anteil der Mischung der Dihydroxyverbindungen (Komponente C).

Das molare Verhältnis der Komponenten B:C liegt im Bereich von 0,9:1 bis 1,1:1, vorzugsweise von 0,95:1 bis 1,05:1 und besonders vorteilhaft werden äquimolare Mengen der Komponenten B und C eingesetzt.

Das molare Verhältnis der Komponenten $B_1$:$B_2$, d.h. von Terephthalsäure zu Isophthalsäure liegt im Bereich von 1,04:1 bis 19:1, vorzugsweise von 1,5:1 bis 9:1.

Das molare Verhältnis von Hydrochinon ($C_1$) zu 4,4'-Dihydroxydiphenyl ($C_2$) liegt im Bereich von 0,1:1 bis 2,67:1, vorzugsweise von 0,5:1 bis 2,33:1.

Weiterhin können 0 bis 5 mol% einer aromatischen Dihydroxyverbindung der allgemeinen Formel I

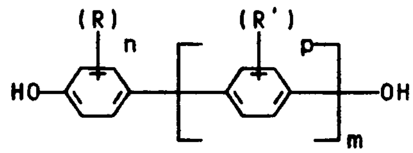

(I)

wobei R und R' Alkylgruppen mit 1 bis 4 C-Atomen, Halogen oder eine Arylgruppe darstellen, n und p den Wert 1, 2 oder 3 und m den Wert 0 oder 1 haben, in der Monomermischung enthalten sein.

Die Substituenten R und R' in der allgemeinen Formel (I) können gleich oder verschieden sein und es können auch mehrere unterschiedliche Substituenten am gleichen aromatischen Ring vorhanden sein.

Für den Fall, daß m in der allgemeinen Formel (I) den Wert 0 hat, hat n bevorzugt den Wert 1, 2 oder 3 während für den Fall, daß m den Wert 1 hat, n und p vorzugsweise 1 oder 2 sind.

Bevorzugte Substituenten R und R' sind die Methyl-, t-Butyl- oder Phenylgruppe. Als bevorzugte Verbindungen der allgemeinen Formel (I) seien die folgenden Verbindungen angeführt:

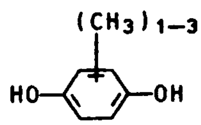

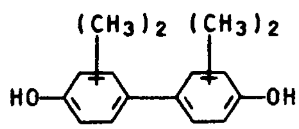

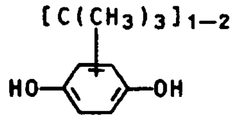

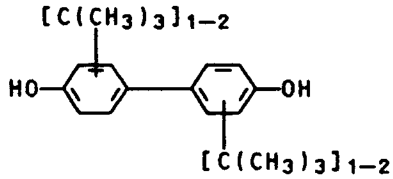

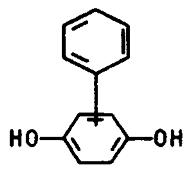

Besonders bevorzugt werden Verbindungen, in denen R und R′ gleich sind.

Die Hydroxyverbindungen der allgemeinen Formel (I) sind an sich bekannt und in der Literatur beschrieben. Die Anwesenheit der Dihydroxyverbindungen $C_3$ ist nicht obligatorisch, hat sich jedoch in einigen Fällen als vorteilhaft herausgestellt. Vorzugsweise werden 0,5 bis 5, insbesondere 1 bis 4 mol% der Komponente $C_3$ eingesetzt.

Der thermotrope, d.h. flüssig-kristalline Zustand der erfindungsgemäßen vollaromatischen Polyester kann z.B. mit dem Polarisationsmikroskop nach einer in der DE-OS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können. Überraschen ist, daß die erfindungsgemäßen Polyester im Vergleich zu den in der DE-A-35 17 587 beschriebenen Fließmodifikatoren deutlich verbesserte Eigenschaften hinsichtlich Verarbeitbarkeit und Wärmeformbeständigkeit aufweisen. Dies wird durch die Verwendung von Mischungen aus Isophthalsäure und Terephthalsäure als Dicarbonsäurekomponente und von Mischungen aus Hydrochinon, 4,4′-Dihydroxydiphenyl und gegebenenfalls einer Dihydroxyverbindung der allgemeinen Formel (I) als Dihydroxykomponente erreicht.

Der Schmelzpunkt der Polyester liegt in der Regel im Bereich von 280 bis 350, insbesondere von 300 bis 350 °C.

Die Wärmeformbeständigkeit, bestimmt nach ISO/R75, Methode A, beträgt im allgemeinen mehr als 180 °C, insbesondere mehr als 200 °C.

Der Schubmodul, bestimmt nach DIN 53 445, beträgt bei 200 °C im allgemeinen mindestens 25 %, insbesondere mindestens noch 30 % des bei 20 °C unter sonst gleichen Bedingungen gemessenen Wertes.

Die relative Viskosität der erfindungsgemäßen vollaromatischen Polyester, bestimmt in 0,1 gew.%iger Lösung in Pentafluorphenol bei 60 °C, liegt vorzugsweise im Bereich von 1 bis 4, insbesondere von 1,5 bis 3,5 dl/g.

Die erfindungsgemäßen thermotropen Polyester lassen sich prinzipiell nach an sich bekannten Verfahren herstellen, wie sie z.B. in der US-A-4 375 530 und 4 118 372 beschrieben werden.

Vorteilhafterweise wird ein Verfahren angewandt, bei dem man die Ausgangsstoffe A, $B_1$, $B_2$, $C_1$, $C_2$ und gegebenenfalls $C_3$ in Gegenwart eines 5-bis 60 %igen molaren Überschusses eines Anhydrids einer Alkancarbonsäure mit 2 bis 6 C-Atomen einer einstufigen Polykondensation in der Schmelze unterwirft. Der molare Überschuß an Anhydrid bezieht sich dabei auf den Gesamtgehalt an OH-Gruppen in der Monomermischung.

Von den Anhydriden der Alkancarbonsäuren mit 2 bis 6 C-Atomen werden Essigsäureanhydrid, Propionsäureanhydrid und Buttersäureanhydrid, und ganz besonders Essigsäureanhydrid bevorzugt. Der molare Überschuß an Säureanhydrid beträgt vorzugsweise 10 bis 50 mol%.

Es hat sich auch als vorteilhaft herausgestellt, die Umsetzung unter Inertgasatmosphäre, z.B. Sitckstoff oder Argon, durchzuführen.

Manchmal ist es vorteilhaft, durch Verwendung von Katalysatoren, z.B. solchen wie sie in der EP-A-131 846 beschrieben werden, die Umsetzung zu beschleunigen. In diesem Fall beträgt der Anteil dieser

Katalysatoren 0,001 bis 1 Gew.%,, bezogen auf die Gesamtmenge der eingesetzten Monomeren.

Im folgenden wird eine besonders bevorzugt Ausführungsform dieses Verfahrens beschrieben.

Die Monomeren A, $B_1$, $C_1$, $C_2$ und gegebenenfalls $C_3$ und das Carbonsäureanhydrid werden unter Inertgasatmosphäre vermischt und unter Rühren bis zum Rückfluß erhitzt. Dabei ist es vorteilhaft, die Temperatur stufenweise zu steigern indem man zunächst bis zu 5 Stunden, vorzugsweise bis zu 2 Stunden bei einer Temperatur von 130 bis 200 °C hält und anschließend die Tempeatur vorzugsweise innerhalb eines Zeitraums von 2 bis 2,5 Stunden auf 250 bis 370 °C erhöht. Dabei werden im Verlauf der Reaktion überschüssiges Carbonsäureanhydrid und gebildete Carbonsäuren abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen vollaromatischen Polyester können anschließend einer Nachkondensation in fester Phase unterworfen werden. Diese wird vorzugsweise bei Tempeaturen im Bereich von 200 bis 300 °C, vorzugsweise von 200 bis 280 °C, vorgenommen. Es ist auch möglich, die Nachkondensation in fester Phase nach einer thermoplastischen Verarbeitung vorzunehmen.

Vorteilhafterweise wird auch die Kondensation in fester Phase in Inertgasatmosphäre, z.B. unter Stickstoff oder Argon, durchgeführt.

Das vorstehend beschriebene Verfahren zeichnet sich dadurch aus, daß in einer Stufe in einer relativ kurzen Zeit vollaromatische Polyester mit vorteilhaften Eigenschaften erhalten werden.

Den erfindungsgemäßen vollaromatischen Polyestern können übliche Zusatzstoffe und Verarbeitungshilfsmittel zugesetzt werden. Hier seien nur Stabilisatoren gegen Oxidation, Wärme, UV-Licht, Gleit- und Entformungsmittel, Farbstoffe und Pigmente, faser- oder pulverförmige Füllstoffe und Verstärkungsmittel, Keimbildungsmittel, Nukleierungsmittel, oder Weichmacher genannt. Derartige Zusätze sind an sich bekannt und in der Literatur beschrieben.

Als Beispiele für Oxidationsverzögerer und Wärmestabilisatoren seien nur Halogenide von Metallen der Gruppe I des Periodensystems, gegebenenfalls in Abmischung mit Kupfer-I-halogeniden oder sterisch gehinderten Phenolen in Konzentrationen bis zu 1 Gew.% angeführt.

Als UV-Stabilisatoren sind substituierte Resorcine, Salicylate, Benzotriazole, Benzophenone sowie deren Mischungen geeignet, die im allgemeinen in Mengen bis zu 2 Gew.% zugesetzt werden.

Farbstoffe und Pigmente werden im allgemeinen in Mengen bis zu 5 Gew.% eingesetzt. Als Beispiele seien Nigrosin, Titandioxid, Cadmiumsulfid, Phthalocyaninfarbstoffe, Ultramarinblau oder Ruß genannt.

Füllstoffe und Verstärkungsmittel sind beispielsweise Kohlenstoffasern, Glasfasern, amorphe Kieselsäure, Calciumsilikat, Aluminiumsilikat, Magnesiumcarbonat, Kaolin, Kreide, gepulverter Quarz, Glimmer und Feldspat die bis zu 70 Gew.%, bezogen auf das Gesamtgewicht der gefüllten Masse ausmachen können.

Als Keimbildungsmittel seien Talkum, Calciumfluorid, Natriumphenylphosphinat, Aluminiumoxid und feinteiliges Polytetrafluorethylen genannt.

Weiterhin können bis zu 20 Gew.% Weichmacher wie Phthalsäureester, Kohlenwasserstofföle und Sulfonamide eingesetzt werden.

Die erfindungsgemäßen vollaromatischen Polyester weisen eine hervorragende Wärmeformbeständigkeit und eine glatte, glänzende und abriebfeste Oberfläche bei heller Eigenfarbe auf. Außerdem sind sie weitgehend chemikalienbeständig, schwer entflammbar und besitzen eine für Polyester ausgezeichnete Hydrolysestabilität.

Aus den erfindungsgemäßen vollaromatischen Polyestern hergestellte Formkörper zeichnen sich durch hervorragende mechanische Eigenschaften, insbesondere Steifigkeit, Festigkeit und Zähigkeit aus. Die vollaromatischen Polyester eignen sich daher besonders zur Herstellung von Formkörpern für die Elektro- und Datentechnik, den Fahrzeugbau und andere technische Bereiche.

Daneben können aus den erfindungsgemäßen Polyestern Fasern und Folien mit einem guten Eigenschaftsspektrum hergestellt werden.

Die Verarbeitung der erfindungsgemäßen Polyester kann in der Regel bei Temperaturen von unterhalb 370 °C durch Spritzguß, Pressen oder Extrusion erfolgen.

Beispiel 1

Zur Herstellung des erfindungsgemäßen Polyesters wurden folgende Komponenten eingesetzt:

4,5 mol (42,86 mol%) 4-Hydroxybenzoesäure
2,4 mol (22,85 mol%) Terephthalsäure
0,6 mol (5,71 mol%) Isophthalsäure
1,8 mol (17,15 mol%) Hydrochinon und

1,2 mol (11,43 mol%) 4,4'-Dihydroxydiphenyl

Diese Komponenten wurden zusammen mit 1360 ml (14,4 mol) Essigsäureanhydrid in einem 5 l-Reaktionskessel unter Stickstoff vorgelegt. Unter Rühren wurde innerhalb von 30 min auf 150 °C, anschließend innerhalb von 170 min auf 345 °C Außentemperatur erhitzt. Im Anschluß daran wurde der Druck auf 560 mbar und im weiteren Verlauf jeweils innerhalb von 10 min auf die Hälfte des vorherigen Wertes reduziert. Die Außentemperatur wurde dabei auf 360 °C erhöht.

Der Enddruck betrug 35 mbar nach einer Gesamtreaktionszeit von 240 min.

Die inhärente Viskosität des erhaltenen Polyesters betrug 3,3 dl/g, gemessen in 0,1 gew.%iger Lösung in Pentafluorphenol bei 60 °C.

Der Polyester bildete eine fadenbildende mesomorphe Schmelze.

Aus DSC-Messungen (Differential Scanning Calorimetry) ergab sich ein Schmelzpunkt von 340 °C.

Das Polymere ließ sich bei 360 °C problemlos im Spritzguß verarbeiten.

Die Wärmeformbeständigkeit nach ISO/R75 betrug nach Methode A 248 °C und nach Methode B mehr als 250 °C.

Der Schubmodul nach DIN 53 445 bei 200 °C betrug noch 48 % unter sonst identischen Bedingungen bei 20 °C gemessenen Wertes.

<u>Beispiel</u> <u>2</u>

Es wurden folgende Komponenten eingesetzt:

4,5 mol (42,86 mol%) 4-Hydroxybenzoesäure
2,1 mol (20 mol%) Terephthalsäure
0,9 mol (8,58 mol%) Isophthalsäure
1,5 mol (14,28 mol%) Hydrochinon und
1,5 mol (14,28 mol%) 4,4'-Dihydroxydiphenyl

Die Ausgangsverbindungen wurden zusammen mit 1326 ml (14,07 mol) Essigsäureanhydrid vermischt und wie in Beispiel 1 beschrieben umgesetzt.

Die Endtemperatur betrug 350 °C und der Enddruck 70 mbar.

Die inhärente Viskosität wurde zu 2,7 dl/g, bestimmt wie in Beispiel 1, gemessen.

Der Schmelzpunkt (aus DSC-Messungen) lag bei 315 °C.

Das Polymere ließ sich bei 340 °C problemlos im Spritzguß verarbeiten; die Wärmeformbeständigkeit nach ISO/R75 betrug 248 °C nach Methode A und mehr als 250 °C nach Methode B.

Der Schubmodul nach DIN 53 445 betrug bei 200 °C noch 51 % des unter sonst identischen Bedingungen bei 20 °C gemessenen Wertes.

<u>Beispiel</u> <u>3</u>

Es wurden folgende Ausgangsverbindungen eingesetzt:

4,5 mol (42,86 mol%) 4-Hydroxybenzoesäure
2,7 mol (25,71 mol%) Terephthalsäure
0,3 mol (2,86 mol%) Isophthalsäure
1,5 mol (14,28 mol%) Hydrochinon
1,2 mol (11,43 mol%) 4,4'-Dihydroxydiphenyl und
0,3 mol (2,86 mol%) Methylhydrochinon

Die Ausgangskomponenten wurden zusammen mit 1360 ml (14,4 mol) Essigsäureanhydrid wie in Beispiel 1 beschrieben umgesetzt.

Die inhärente Viskosität des erhaltenen Produkts, bestimmt wie in Beispiel 1, betrug 2,08 dl/g, der Schmelzpunkt aus DSC-Messungen ergab sich zu 345 °C und der Schubmodul nach DIN 53 445 betrug bei 200 °C noch 45 % des Werts der bei 20 °C bestimmt wurde.

Das Polymere ließ sich bei 360 °C problemlos im Spritzguß verarbeiten.

<u>Beispiel</u> <u>4</u>

Es wurde wie in Beispiel 3 gearbeitet, nur Methylhydrochinon durch t-Butylhydrochinon ersetzt.

Die inhärente Viskosität des erhaltenen Produkts betrug 2,14 dl/g, der Schmelzpunkt aus DSC-Messungen ergab sich zu 335 °C und der Schubmodul nach DIN 53 445 betrug bei 200 °C noch 40 % des bei 20 °C gemessenen Werts.

Das Polymere ließ sich bei 350 °C problemlos im Spritzguß verarbeiten.

Beispiel 5

Es wurden folgende Komponenten eingesetzt:
4,5 mol (42,86 mol%) 4-Hydroxybenzoesäure
2,4 mol (22,86 mol%) Terephthalsäure
0,6 mol (5,71 mol%) Isophthalsäure
1,2 mol (11,43 mol%) Hydrochinon,
1,5 mol (14,28 mol%) 4,4'-Dihydroxydiphenyl und
0,3 mol (2,86 mol%) Methylhydrochinon
Diese Ausgangsstoffe wurden mit 1360 ml Essigsäureanhydrid wie in Beispiel 1 beschrieben umgesetzt, lediglich die Endtemperatur betrug 350°C und der Enddruck 50 mbar.

Die inhärente Viskosität des erhaltenen Produkts betrug 1,15 dl/g, der Schmelzpunkt ergab sich zu 320°C und der Schubmodul betrug bei 200°C noch 35 % des bei 20°C gemessenen Wertes.

Das Polymere ließ sich bei 350°C problemlos in Spritzguß verarbeiten.

Beispiel 6

Es wurde wie in Beispiel 5 gearbeitet, lediglich Methylhydrochinon durch Trimethylhydrochinon ersetzt.

Die Endtemperatur nach der Umsetzung betrug 350°C und der Enddruck 100 mbar.

Die inhärtente Viskosität betrug 2,54 dl/g, der Schmelzpunkt aus DSC-Messungen wurde zu 320°C bestimmt und der Schubmodul nach DIN 53 445 betrug bei 200°C noch 32 % des Wertes bei 20°C.

Vergleichsbeispiel 1 (Beispiel 3 aus DE-OS 35 17 587)

Es wurde folgende Komponenten eingesetzt:
0,306 mol (49,92 mol%) 4-Hydroxybenzoesäure
0,134 mol (21,86 mol%) Terephthalsäure
0,019 mol (3,10 mol%) Isophthalsäure und
0,154 mol (25,12 mol%) 4,4'-Dihydroxydiphenyl
Die Komponenten wurden mit 67,4 ml Essigsäureanhydrid wie in Beispiel 1 beschrieben umgesetzt.

Die Endtemperatur außen betrug 360°C, der Enddruck 8 mbar.

Im Gegensatz zu den Beispielen 1 bis 6, in denen nach der Reaktion eine fadenbildende mesomorphe Schmelze erhalten wurde, war das Reaktionsprodukt in diesem Fall fest und besaß eine grau-gelbe Farbe.

Das Polymere konnte bis 400°C nicht geschmolzen werden und war in Pentafluorphenol unlöslich, so daß auch keine relative Viskosität bestimmt werden konnte.

Ein nach dem Verfahren in der DE-A-35 17 587 (Beispiel 3) hergestelltes Produkt der gleichen Zusammensetzung war ebenfalls bis 400°C nicht schmelzbar und damit unterhalb dieser Temperatur thermoplastisch nicht zu verarbeiten.

Vergleichsbeispiel 2 (Beispiel 4 aus DE-A-35 17 587)

Es wurden folgende Komponenten eingesetzt:
0,37 mol (64,92 %) 4-Hydroxybenzoesäure
0,1 mol (17,54 mol%) Isophthalsäure und
0,1 mol (17,54 %) 4,4'-Dihydroxydiphenyl
Die Komponenten wurden mit 62 ml Essigsäureanhydrid wie in Beispiel 1 beschrieben umgesetzt.

Die Endtemperatur betrug in diesem Fall 330°C, der Enddruck 53 mbar.

Die inhärente Viskosität des erhaltenen Produkts betrug 1,9 dl/g, und das Polymere zeigte eine gute Fadenbildungstendenz aus der anisotropen Schmelze.

Der Schubmodule nach DIN 53 445 betrug bei 200°C jedoch lediglich noch 0,6 % des unter sonst identischen Bedingungen bei 20°C gemessenen Werts.

Die vorstehenden Beispiele zeigen, daß sich die erfindungsgemäßen vollaromatischen Polyester insbesondere im Vergleich zu den aus DE-A-35 17 587 bekannten Produkten durch ein insgesamt wesentlich verbessertes Eigenschaftsspektrum auszeichnen.

**Patentansprüche**

**1.** Vollaromatische thermotrope Polyester auf der Basis von

A) 30 bis unter 60 mol% 4-Hydroxybenzoesäure
B) 20 bis 35 mol% einer Mischung aus
$B_1$) Terephthalsäure und
$B_2$) Isophthalsäure

wobei das molare Verhältnis von $B_1 : B_2$ im Bereich von 1,04:1 bis 19:1 liegt, und

C) 20 bis 35 mol% einer Mischung aus
$C_1$) Hydrochinon
$C_2$) 4,4'-Dihydroxydiphenyl und
$C_3$) 0 bis 5 mol% einer Dihydroxyverbindung der allgemeinen Formel I

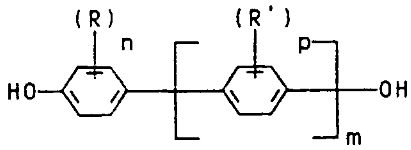

(I)

wobei R und R' Alkylgruppen mit 1 bis 4 C-Atomen, Halogen oder eine Arylgruppe darstellen, n und p den Wert 1, 2 oder 3 und m den Wert 0 oder 1 haben, das molare Verhältnis von $C_1 : C_2$ im Bereich von 0,1:1 bis 2,67:1 liegt,

das molare Verhältnis von B:C im Bereich von 0,9:1 bis 1,1:1 liegt und die Summe der Komponenten A + B + C stets 100 mol% ergibt.

**2.** Vollaromatische thermotrope Polyester nach Anspruch 1, dadurch gekennzeichnet, daß das molare Verhältnis der Komponenten $B_1 : B_2$ im Bereich von 1,5:1 bis 10:1 liegt.

**3.** Vollaromatische thermotrope Polyester nach den Ansprüchen 1 und 2, dadurch gekennzeichnet, daß das molare Verhältnis der Komponenten $C_1 : C_2$ im Bereich von 0,5:1 bis 2,33:1 liegt.

**4.** Vollaromatische thermotrope Polyester nach den Ansprüchen 1 bis 3, dadurch gekennzeichnet, daß der Anteil der Komponente $C_3$ 0,5 bis 5 mol% beträgt.

**5.** Vollaromatische thermotrope Polyester nach Anspruch 4, dadurch gekennzeichnet, daß der Anteil der Komponente $C_3$ 1 bis 4 mol% beträgt.

**6.** Vollaromatische thermotrope Polyester nach den Ansprüchen 1 bis 5, erhältlich durch einstufige Polykondensation der Komponenten A, $B_1$, $B_2$, $C_1$, $C_2$ und $C_3$ in der Schmelze in Gegenwart eines 5 bis 60 %igen molaren Überschusses, bezogen auf den Gesamtgehalt an OH-Gruppen, von Anhydriden von Alkancarbonsäuren mit 2 bis 6 C-Atomen.

**7.** Verfahren zur Herstellung von vollaromatischen thermotropen Polyestern gemäß den Ansprüchen 1 bis 6 durch einstufige Polykondensation in der Schmelze in Gegenwart von Anhydriden von Alkancarbonsäuren mit 2 bis 6 C-Atomen, dadurch gekennzeichnet, daß man

a) Komponenten A, $B_1$, $B_2$, $C_1$ , $C_2$ und $C_3$ in Gegenwart eines 5 bis 60 %igen molaren Überschusses, bezogen auf den Gesamtgehalt an OH-Gruppen, der Anhydride der Alkancarbonsäuren umsetzt und, gegebenenfalls,
b) die erhaltenen Produkte einer Nachkondensation in fester Phase unterwirft.

**8.** Verwendung der vollaromatischen thermotropen Polyester gemäß den Ansprüchen 1 bis 6, oder wie nach Anspruch 7 erhalten, zur Herstellung von Fasern, Folien und Formkörpern.

**9.** Dimensionsstabile Formkörper, enthaltend als wesentliche Komponente vollaromatische thermotrope Polyester gemäß den Ansprüchen 1 bis 6 oder wie nach Anspruch 7 erhalten.

## Claims

**1.** A fully aromatic thermotropic polyester based on

A) from 30 to less than 60 mol % of 4-hydroxybenzoic acid,

B) from 20 to 35 mol % of a mixture of

$B_1$) terephthalic acid and

$B_2$) isophthalic acid,

the molar ratio of $B_1$ to $B_2$ being from 1.04:1 to 19:1, and

C) from 20 to 35 mol % of a mixture of

$C_1$) hydroquinone,

$C_2$) 4,4'-dihydroxydiphenyl and

$C_3$) from 0 to 5 mol % of a dihydroxy compound of the formula I

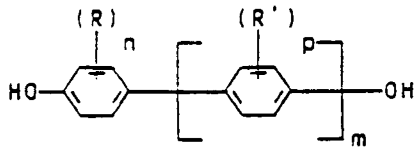

(I)

where R and R' are each alkyl of 1 to 4 carbon atoms, halogen or aryl, n and p are each 1, 2 or 3 and m is 0 or 1,

the molar ratio of $C_1$ to $C_2$ being from 0.1:1 to 2.67:1, the molar ratio of B to C being from 0.9:1 to 1.1:1 and the sum of the components A + B + C always being 100 mol %.

**2.** A fully aromatic thermotropic polyester as claimed in claim 1, wherein the molar ratio of components $B_1$ to $B_2$ is from 1.5:1 to 10:1.

**3.** A fully aromatic thermotropic polyester as claimed in claim 1 or 2, wherein the molar ratio of components $C_1$ to $C_2$ is from 0.5:1 to 2.33:1.

**4.** A fully aromatic thermotropic polyester as claimed in any of claims 1 to 3, wherein the amount of component $C_3$ is from 0.5 to 5 mol %.

**5.** A fully aromatic thermotropic polyester as claimed in claim 4, wherein the amount of component $C_3$ is from 1 to 4 mol %.

**6.** A fully aromatic thermotropic polyester as claimed in any of claims 1 to 5, obtainable by single-stage polycondensation of components A, $B_1$, $B_2$, $C_1$, $C_2$ and $C_3$ in the melt, in the presence of a 5-60% molar excess, based on the total content of OH groups, of an anhydride of an alkanecarboxylic acid of 2 to 6 carbon atoms.

**7.** A process for the preparation of a fully aromatic thermotropic polyester as claimed in any of claims 1 to 6 by single-stage polycondensation in the melt in the presence of an anhydride of an alkanecarboxylic acid of 2 to 6 carbon atoms, wherein

a) components A, $B_1$, $B_2$, $C_1$, $C_2$ and $C_3$ are reacted in the presence of a 5-60% molar excess, based on the total content of OH groups, of the anhydride of the alkanecarboxylic acid, and,

b) the resulting product may be subjected to postcondensation in the solid phase.

**8.** Use of a fully aromatic thermotropic polyester as claimed in any of claims 1 to 6, or as obtained according to claim 7, for producing fibers, films and moldings.

**9.** A dimensionally stable molding containing, as an essential component, a fully aromatic thermotropic polyester as claimed in any of claims 1 to 6 or as obtained according to claim 7.

## Revendications

**1.** Polyesters thermotropes entièrement aromatiques, a base de

A) 30 à moins de 60% en moles d'acide 4-hydroxybenzoique.
B) 20 à 35% en moles d'un mélange
$B_1$) d'acide térephtalique et
$B_2$) d'acide isophtalique,
le rapport molaire de $B_1$ à $B_2$ se situant dans la gamme de 1,04:1 à 19:1, et
C) 20 à 35% en moles d'un mélange
$C_1$) d'hydroquinone,
$C_2$) de 4,4'-dihydroxydiphényle et
$C_3$) de 0 à 5% en moles d'un composé dihydroxylé de formule générale I

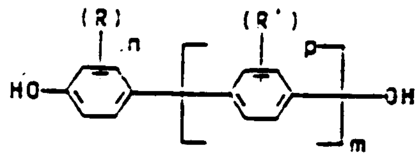

(I)

dans laquelle R et R' représentent des groupements alkyle à 1-4 atomes de carbone, des atomes d'halogène ou un groupement aryle, n et p ont la valeur 1, 2 ou 3 et m à la valeur 0 ou 1, le rapport molaire de $C_1$ á $C_2$ se situant dans la gamme de 0,1:1 à 2,67:1,
le rapport molaire de B à C se situant dans la gamme de 0,9:1 à 1,1:1 et la somme des composants A + B + C donnant constamment 100% en moles.

**2.** Polyesters thermotropes entièrement aromatiques selon la revendication 1, caractérisés en ce que le rapport molaire du composant $B_1$ au composant $B_2$ se situe dans la gamme de 1,5:1 à 10:1.

**3.** Polyesters thermotropes entièrement aromatiques selon la revendication 1 ou 2, caractérisés en ce que le rapport molaire du composant $C_1$ au composant $C_2$ se situe dans la gamme de 0,5:1 à 2,33:1.

**4.** Polyesters thermotropes entièrement aromatiques selon l'une quelconque des revendications 1 à 3, caractérisés en ce que la part du composant $C_3$ s'élève à 0,5-5% en moles.

**5.** Polyesters thermotropes entièrement aromatiques selon la revendication 4, caractérisés en ce que la part du composant $C_3$ s'élève à 1-4% en moles.

**6.** Polyesters thermotropes entièrement aromatiques selon l'une quelconque des revendications 1 à 5, pouvant être obtenus par polycondensation en une seule étape des composants A, $B_1$, $B_2$, $C_1$, $C_2$ et $C_3$ à l'état fondu, en présence d'un excès molaire de 5 à 60%, par rapport à la teneur totale en groupements OH, d'anhydrides d'acides alcanecarboxyliques à 2-6 atomes de carbone.

**7.** Procédé de préparation de polyesters thermotropes entièrement aromatiques selon l'une quelconque des revendications 1 à 6 par polycondensation en une seule étape à l'état fondu, en présence d'anhydrides d'acides alcanecarboxyliques à 2-6 atomes de carbone, caractérisé en ce que
a) on fait réagir les composants A, $B_1$, $B_2$, $C_1$, $C_2$ et $C_3$ en présence d'un excès molaire de 5 à 60%, par rapport à la teneur totale en groupements OH, des anhydrides d'acides alcanecarboxyliques à 2-6 atomes de carbone, et éventuellement
b) on soumet les produits obtenus à une postcondensation en phase solide.

**8.** Utilisation des polyesters thermotropes entièrement aromatiques selon l'une quelconque des revendications 1 à 6 ou tels qu'obtenus selon la revendication 7, pour la fabrication de fibres, de feuilles ou de corps moulés.

**9.** Corps moulés dimensionnellement stables, contenant, en tant que composants principaux, des polyesters thermotropes entièrement aromatiques selon l'une quelconque des revendications 1 à 6 ou tels qu'obtenus selon la revendication 7.